# EUROPEAN PATENT APPLICATION

(11) **EP 0 975 163 A2**
(43) Date of publication of application: **26.01.2000**
(21) Application number: 99106164.9
(22) Date of filing: 08.04.1999
(51) Int. Cl.: H04N 5/782

(54) **Recording apparatus for recording broadcast signal, in which program information is multiplexed and transmitted, using the program information**

(30) Priority: 24.07.1998 JP 20985698
(71) Applicant: TOSHIBA VIDEO PRODUCTS JAPAN CO., LTD., Tokyo-to 105-8001 (JP)
(72) Inventor: Ebara, Shigeji, Warabi-shi, Saitama-ken 335-0005 (JP)
(74) Representative: HOFFMANN - EITLE

(57) **Abstract**

A recording apparatus having a recording means 20 for recording in a recording medium 21 having a predetermined recording area in a plurality of recording modes specified by an amount of recorded information per unit area of the recording medium 21, and records a broadcast signal. A program guide reading unit 12 reads program data from the broadcast signal a1 received by a receiving means 11. A data comparison unit 14 compares the reservation data c1 stored in a reserved program data storage unit 13 with a program data relating to the reserved program transmitted from a broadcasting station, and changes the reservation data c1 of the reserved program data storage unit 13 based on the program data being received when the comparison result indicates difference. A recording mode control unit 16 compares the remaining broadcast time of the reserved program computed based on the time information d1 in the reservation data of the reserved program data storage unit 13 with the remaining recording time e1 of the recording medium (magnetic tape, disk, etc.) detected by a remainder detecting unit 15, and changes the recording mode of the recording means 20 such that the reserved program can be completely recorded within the remaining recording time (recordable area) e1, or such that the highest level read signal can be obtained when the reserved program is completely recorded and then played back.

## Description

### Background of the Invention

### Field of the Invention:

The present invention relates to a recording apparatus for recording such as a broadcast signal of television, in which the program information is multiplexed and transmitted, using the program information and more particularly to a recording apparatus for ensuring the recording of a program when its broadcast time is changed.

### Description of the Related Art:

An apparatus for recording a broadcast signal, for example, a video tape recorder (hereinafter referred to as a VTR) includes a timer recording means for recording a program in the absence of the user by storing (reserving) in advance the time information about the program to be recorded including the starting and ending times of the program and the broadcast channel information.

The reservation of a program can be manually set by the user by checking the broadcast program in a newspaper, etc. If the ending time of the program is extended, or the starting time of the program is advanced or delayed for any reason, then the program cannot be successfully recorded.

There is an attempt to solve this problem by superimposing information specifying a program into the broadcast signal to broadcast the program. For example, PDC (Program Delivery Control) in England, and VPS (Video Program System) in Germany are already in use. In these systems, program identification information including the information (program label) for specifying a program represented by a program starting time, a nation code, a broadcasting station code, etc., is superimposed into the television signal for the entire period of the program to be broadcast. Timer reservation information including a program label is stored in a VTR in advance, and data can be recorded with a change of the broadcast time of a program taken into account by continuing a recording operation while the program label of the broadcast matches the program label stored in the VTR. The timer reservation information can be stored as reservation data by displaying a list of program labels on the screen of a display (not shown) and specifying a desired reserved program with a cursor.

The number reservation method according to the above described program identification information of the PDC/VPS is described in the German Publication No.2950432 (United States Patent No.4390901) relating to the German VPS, the European Patent Registration and Publication No.EP300562 (United States Patent No.4908707) relating to the British PDC, and the Japan Published Unexamined Patent Application No. Hei 2-189753 relating to the system using the Japanese character-multiplexed broadcast.

However, in the PDC/VPS described in the above described publication, the start and end of the broadcast of a program is detected depending on the existence of program identification information. Since the program identification information includes no information about the actual starting and ending times of the program, an extended time cannot be computed in advance when, for example, the broadcast time is extended. Therefore, unless the remaining tape covers the actually extended time, there arises a problem that the tape runs short during the program.

In Japan, a system capable of broadcasting program information using a teletext broadcast and enabling the timer-reservation of a program by displaying program information on the screen has been developed. However, the program information only covers the contents of a program column in a newspaper. Therefore, when a sudden change of a broadcast time is made, it is actually impossible to broadcast the changed information in addition to the reserved program information.

If the system is farther developed to broadcast the information by including the changed information in real time in the program information (program guide information), then it becomes possible to perform control of the recording operations of a VTR such that the actual broadcast time is successfully covered even if a change is made to the broadcast time. For example, a VTR can be operated according to the actual broadcast time by performing multiplexed broadcast of program information in real time including the ending time of the currently broadcast program and the starting time of the next program.

### Summary of the Invention

It is an object of the present invention to provide a recording apparatus capable of recording all of a program even when the broadcast time of the program is changed.

It is another object of the present invention to provide a recording apparatus capable of using the program guide information (EPG) including the information about the actual starting and ending times of the program; changing the reserved contents in real time according to the ending time of the current program or the starting time of the next program, included in the broadcast signal even when a change is made to the broadcast time of the program; and of efficiently recording data in the remaining storage area of a recording medium.

According to a first embodiment of the present invention, a recording apparatus which has recording means for recording in a recording medium having a predetermined recording area a variable amount of recorded information per unit area of the recording medium, and records a broadcast signal comprises:
recordable area determination means for determining a recordable area (remainder) of said recording medium, and outputting recordable area information;
receiving means for receiving a broadcast signal with which program information including a broadcast time of a program is multiplexed and broadcast;
extraction means for extracting broadcast time information about said program from the received broadcast signal; and
record control means for adjusting an amount of information per unit area of the recording medium in said recording means such that the program can be completely recorded in said recordable area according to said broadcast time information and said recordable area information.

According to a second embodiment of the present invention, a recording apparatus which has recording means for recording in a recording medium having a predetermined recording area a variable amount of recorded information per unit area of the recording medium, and records a broadcast signal comprises:
recordable area determination means for determining a recordable area of said recording medium, and outputting recordable area information;
receiving means for receiving the broadcast signal with which program information including a broadcast time about a program is superimposed and broadcast;
extraction means for extracting broadcast time information of said program from the received broadcast signal; and
record control means for adjusting an amount of information per unit area of said recording medium in said recording means such that a highest level read signal can be obtained when the program is completely recorded and played back according to said broadcast time information and said recordable area information.

According to a third embodiment of the present invention, a recording apparatus which has a recording medium and records a television broadcast signal comprises:
timer reservation means for storing in advance recording reservation information including time information about a program to be recorded;
receiving means for receiving a television broadcast signal in which program information including a broadcast time about the program is superimposed into a vertical blanking interval and broadcast;
extraction means for extracting broadcast time information about said program from the received television broadcast signal; and
timer reservation time change means for comparing the time information stored by said timer reservation means with said broadcast time information about the program, and changing the time information stored by said timer reservation means according to said broadcast time information when a comparison result indicates difference.

### Brief Description of the Drawings

Fig. 1 is a block diagram showing a recording apparatus according to an embodiment of the present invention;
Figs. 2 and 3 are flowcharts illustrating the reservation data changing operation and recording mode changing operation of the control means according to the embodiment of Fig. 1.
Fig. 4 shows a waveform diagram of a broadcast signal (for example, a television broadcast signal) to which the present invention can be applied; and
Fig. 5 shows an example of a list of program reserving operations.

### Detailed Description of the Preferred Embodiments

The embodiments of the present invention will be described below by referring to the accompanying drawings.

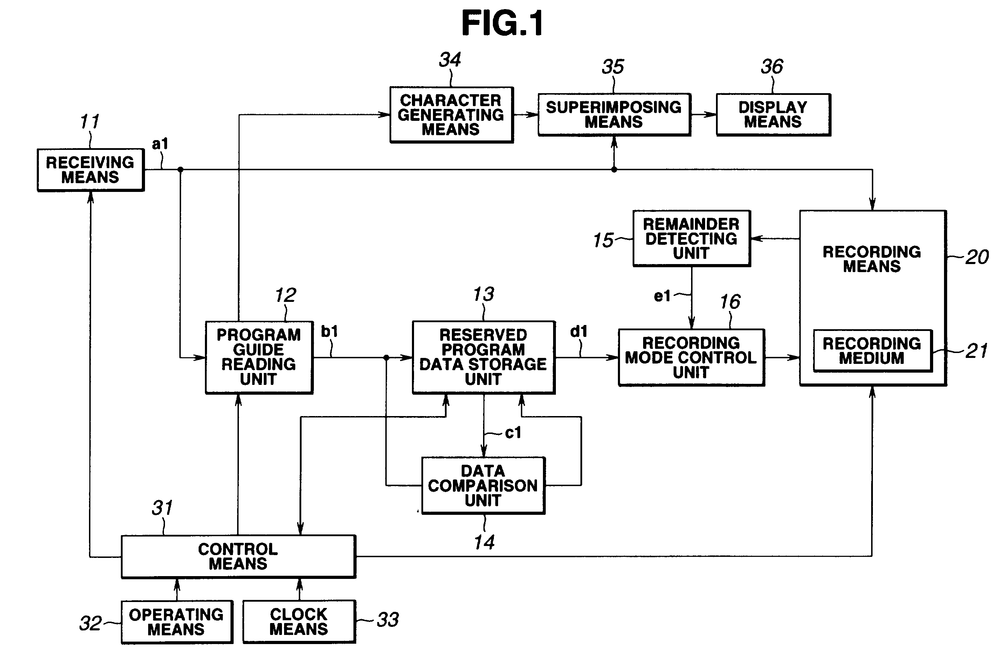

Fig. 1 is a block diagram showing a recording apparatus according to an embodiment of the present invention. In the embodiment of the present invention, a recording apparatus, such as a video tape recorder (VTR) and a digital video disk recorder (DVD), capable of receiving a television broadcast signal with which program guide information (program information) including a program broadcast time is multiplexed, and reserving and recording a program is described.

In Fig. 1, the recording apparatus comprises a receiving means 11 for selecting, receiving, detecting, and outputting a broadcast signal such as a television broadcast signal; a program guide reading unit 12 as an extraction means for extracting program guide information from the received and detected broadcast signals; a reserved program data storage unit 13 as a timer reservation means for storing (setting) program reservation data (channel information, time information, recording mode information, etc.) in the reservation memory; a data comparison unit 14 as a timer reservation time change means for changing the reservation data of the reserved program data storage unit 13 when the broadcast time information in the program information is changed; a remainder detecting unit 15 as a recordable area determination means for detecting the current recordable area (normally represented by the remaining recording time in the initialized recording mode) of a recording medium 21 in a recording means 20; a recording mode control unit 16 as a record control means for computing the scheduled broadcast time or the remaining broadcast time before staffing the recording of the reserved program or during the recording operation based on the change in the reserved data when a change (prolonging or shortening) is made to the broadcast time information about a broadcast program during the reception of the broadcast program, comparing the scheduled broadcast time or the remaining broadcast time with the recordable area (remaining recording time) of the recording medium 21, and adjusting the amount of recorded information per unit area of the recording medium 21 such that the reserved program can be completely recorded within the remaining recording time of the recording medium 21 (that is, the recording mode specified by the amount of recorded information per unit area can be changed); a recording means 20 for recording the broadcast signal for the recording medium 21; and a control means 31 configured wit a microcomputer for controlling the receiving means 11, the program guide reading unit 12, the reserved program data storage unit 13, the recording means 20, etc., at an instruction from an operating means 32.

Furthermore, the apparatus can further include, as units for reserving a program on a display screen, which are known in the art, a character generating means 34 for generating a character signal according to the program information read by the program guide reading unit 12; a superimposing unit 35 for superimposing the program information signal from the character generating means 34 into the television video signal received and detected by the receiving means 11; and a display unit 36 for displaying the superimposed signal on the screen.

The receiving means 11 is a means for receiving a television broadcast signal for broadcast with the program guide information including the broadcast time information of the program superimposed in the vertical blanking interval. The television broadcast signal a1 received by the receiving means 11 is supplied to the program guide reading unit 12 as a program guide information extraction means and the recording means 20. The program guide information includes the explanation about the contents of a program in addition to the broadcast date, the name of a program, an applicable channel, etc. The broadcast time information included in the program guide information immediately includes time information about a change (prolonging or shortening) of the broadcast time of a program if any.

The program guide reading unit 12 reads necessary data b1 for record reservation from the program guide information superimposed into the television broadcast signal a1 from the receiving means 11, and supplies the read data b1 to the reserved program data storage unit 13 as a timer reservation means and the data comparison unit 14 as a timer reservation time change means.

The reserved program data storage unit 13 is provided with at least one unit of reservation memory, stores the data b1 in the program guide information read by the program guide reading unit 12 as reservation data in the reservation memory, supplies the stored reservation data as data c1 to the data comparison unit 14, and supplies the broadcast time information in the stored reservation data c1 as data d1 to the recording mode control unit 16 which is a record control means. The contents of the reserved data stored in the reservation memory can be the date, broadcast channel, starting time, ending time, and recording mode. There can be only one unit of reservation memory. In this case, the memory can store reservation data about a plurality of programs.

The data comparison unit 14 compares the reservation data stored by the reserved program data storage unit 13 with the current (real time) program data b1 read by the program guide reading unit 12, and changes the reservation data stored by the reserved program data storage unit 13 when they do not match.

On the other hand, the remainder detecting unit 15 detects the remaining recording time indicating the recordable area of the recording medium (magnetic tape, disk, etc.) in the recording means 20, and supplies the detection result, that is, the remaining recording time data e1 to the recording mode control unit 16. In this case, normally, the video tape recorder (VTR) measures the remainder of the tape based on the rotation detection pulse (FG) of the capstan and the rotation detection pulse of the reel.

The recording mode control unit 16 compares the remaining recording time for the reserved program depending on the change of reservation data by the reserved program data storage unit 13 with the remaining recording time of the recording medium (magnetic tape, disk, etc.) detected by the remainder detecting unit 15 based on the provided data d1 and e1, adjusts the amount of information per unit area of the recording medium 21 in the recording means 20 such that the program can be completely stored within the remaining recording time of the recording medium 21, or adjusts the amount of information per unit area of the recording medium 21 in the recording means 20 such that the highest level read signal can be obtained when the program is played back after being completely recorded, and records the television broadcast signal a1 from the receiving means 11 in the recording medium 21.

Otherwise, the recording mode control unit 16 compares the remaining recording time for the reserved program depending on the change of reservation data by the reserved program data storage unit 13 with the remaining recording time of the recording medium (magnetic tape, disk, etc.) detected by the remainder detecting unit 15 based on the provided data d1 and e1, changes the recording mode such that the program can be completely stored within the remaining recording time of the recording medium 21, or records the television broadcast signal a1 from the receiving means 11 in the recording medium 21 in the recording mode such that the optimum recording efficiency in the recording medium 21 of the recording means 20 can be obtained. That is, a VTR starts recording images in a standard recording mode (SP), and records a program completely by automatically switching the recording mode from the standard recording mode (SP) to the long recording mode (EP) if the remaining time of the magnetic tape is shorter than the remaining time of the reserved program being recorded. When the recording medium 21 is a disk, the recording operation is started at a high data rate of a digital signal. When the program cannot be recorded, the rate is switched into a lower rate, thereby completely recording the program. The recording mode can be switched during the broadcast of the program regardless of whether the recording medium 21 is a tape or a disk.

The recording means 20 has a recording medium 21 and records a broadcast signal in the recording medium 21. Otherwise, the recording means 20 has a recording medium 21 and records a broadcast signal in the recording medium 21 and plays it back.

The first example of the recording medium 21 is a magnetic tape contained in a cassette which can be operated in a standard recording mode and a long time recording mode at a speed lower than the standard recording mode.

The second example of the recording medium 21 is a disk having a recording surface. In this case, the recording means 20 has a means for recording the recording information signal as a digital signal on the recording medium, and changing the data rate of the recording digital signal under the control of the recording mode control unit 16.

The control means 31 perform appropriate control to select a channel using the receiving means 11 based on the channel key operation of the operating means 32, to display the program information read by the program guide reading unit 12 based on the operation of the recording reservation key (or program information display key), to set the program reservation data in the reserved program data storage unit 13 based on the cursor key operation and the reservation determining key operation of the operating means 32, and to allow the receiving means 11 to select a channel of a program to be reserved based on the channel data in the program reservation data and allow the recording means 20 to start or stop recording the reserved program when the current time data from a clock means 33 is compared with and matches the reservation time data in the program reservation data.

In Fig. 1, the reserved program data storage unit 13 which is a timer reservation means can set a reservation by inputting using keys necessary items one by one by user referring to a program list (printed matters, etc.) without limiting programs to be reserved by cursor-specifying from a program list obtained from the program information contained in the broadcast signals transmitted from a broadcasting station.

That is, the reserved program data storage unit 13 only has to store in advance by a user the record reservation information including the time information about a program to be recorded and the recording mode information. The data comparison unit 14 only has to compare the time information stored by the reserved program data storage unit 13 with the broadcast time information about the program extracted from the broadcast signal, and change the time information stored by the reserved program data storage unit 13 according to the broadcast time information when the comparison indicates difference. At this time, if the change of time is known before the start of broadcasting the program, then the time information of the reserved program data storage unit 13 is changed before recording the program. If the ending time is changed after starting the recording of the program, then the ending time information is changed while the program is recorded.

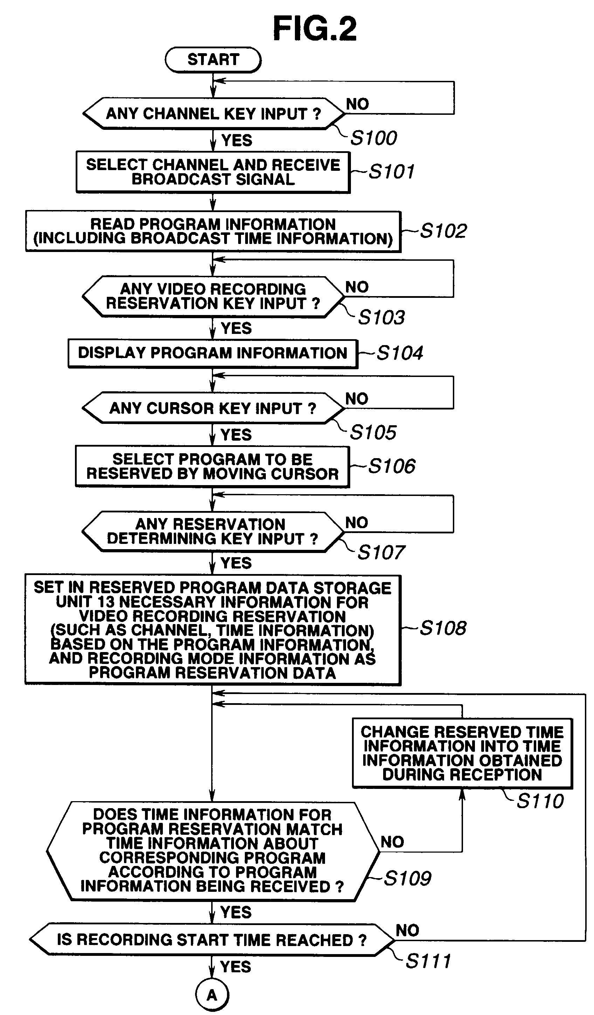

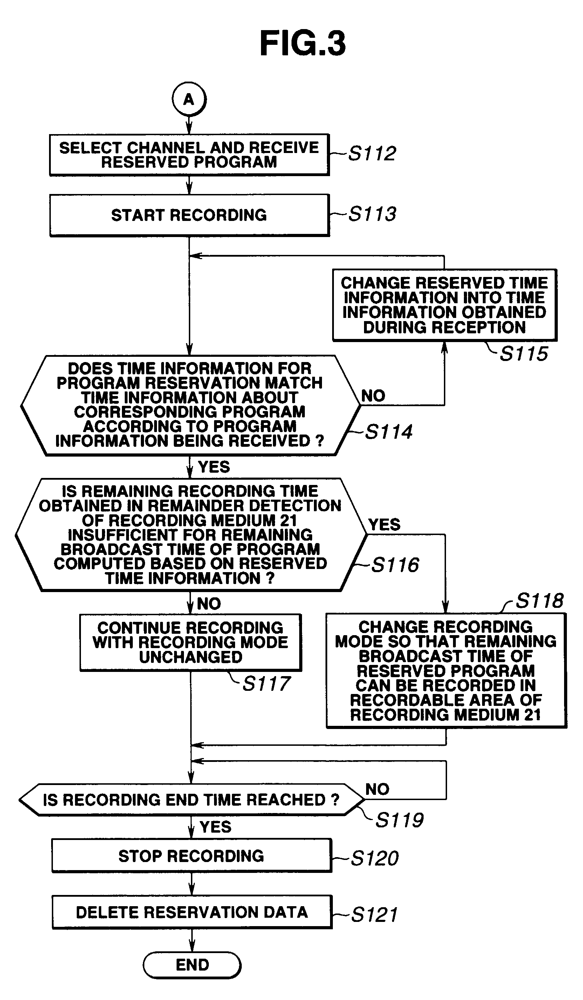

Figs. 2 and 3 are flowcharts of the operations for changing a reservation data and recording mode of the control means according to the embodiment of Fig. 1. Figs. 2 and 3 originally come from one figure, but have been divided for convenience in descriptions.

In step S100, the process starts only after the user inputs a channel key. When the user inputs a channel number, the receiving means 11 selects a desired television broadcast signal and receives it in S101. Then, in step S102, the program guide reading unit 12 reads the program information. In S103, the process starts only after the user inputs a recording reservation key. When the user starts operating the recording reservation key, the program information (including the broadcast time information) is displayed on the display means 36 in step S104. In S105, the process starts only after the user inputs a cursor key. In S106, when the user operates a cursor key, the cursor is positioned at a user-desired program to be reserved. In S107, the process starts only after a reservation determining key is input. When the user operates the reservation determining key, the information (channel, time information, etc.) necessary for a recording reservation according to the program information and the recording mode information of the recording means 20 are set in the reserved program data storage unit 13 as program reservation data in S108.

In a recording apparatus according to the embodiment, the receiving means 11, the program guide reading unit 12, the reserved program data storage unit 13, the data comparison unit 14, the control means 31, and the clock means 33 are still in the active state even after setting the program reservation data in S108, and continues receiving the television broadcast signal of the channel selected in S101. Thus, the program information included in the broadcast signal is constantly read at a constant period by the program guide reading unit 12.

In S109, the data comparison unit 14 compares the time information of the program reservation data set by the reserved program data storage unit 13 with the time information obtained from the program information (that is, the time information about the same program as the reserved program, currently being transmitted from the broadcasting station) read by the program guide reading unit 12 from the broadcast signal currently being received, and determines whether or not they match each other. If they do not match, control is transferred to S110, and the time information of the program reservation data is rewritten to the time information obtained from the broadcast signal currently being received, thereby changing the program reservation data.

If the time information of the reserved program matches the time information of the program information currently being received in S108 through S110, control is transferred to S111. In S111, it is determined whether or not the current time by the clock means 33 has reached the starting time of the reserved program. If the recording start time has not been reached, control is returned to S109. If the starting time of the reserved program is reached in S111, control is transferred to S112 shown in Fig. 3. In S112, the channel of the reserved program is selected by controlling the receiving means 11, and the recording is started by controlling the recording means 20 in S113. At this time, the recording mode is preliminarily set in the program reservation data (the recording mode can be initially set by the recording means 20). Normally, the recording is started from a standard recording state. That is, it is started in the standard recording mode specified by the amount of information recorded per unit area, or at a standard (high) data rate.

Then, control is passed to S114 and S115. S114 and S115 are similar to S109 and S110.

In S114, the data comparison unit 14 compares the time information (in this example, the program ending time or the staffing time of the next program) of the program reservation data (the program of the reserved data is being received) set in the reservation memory of the reserved program data storage unit 13 with the time information obtained from the program information (in this example, the program ending time or the starting time of the next program) read by the program guide reading unit 12 from the broadcast signal currently being received, and determines whether or not they match each other. If they do not match, it is assumed that the broadcast ending time has been changed (prolonged or shortened), and control is transferred to S115, and the data comparison unit 14 rewrites the time information (ending time) of the program reservation data to the time information (ending time) obtained from the broadcast signal currently being received, thereby changing the program reservation data. Then control is transferred to S116.

In S116, the recording mode control unit 16 computes the remaining broadcast time of the reserved program being received based on the changed ending time data (or the starting time data of the next program), compares the remaining broadcast time of the reserved program with the remaining recording time of the recording medium 21 obtained from the remainder detecting unit 15, and determines whether or not the remaining recording time of the recording medium 21 is shorter than the remaining broadcast time of the reserved program being recorded. If it is not shorter, the recording continues as is in the current recording mode in S117. If it is shorter, the recording mode specified by the amount of recorded information per unit area of the recording medium 21 is changed such that the remaining broadcast time of the reserved program can be efficiently stored in the recordable area (remainder) of the recording medium 21, or changed into a lower data rate for recording.

Then, in S119, it is determined whether or not the ending time of the reserved program has been reached. If yes, the recording means 20 is controlled in S120, and the recording is stopped. After completing the recording, the reservation data of the recorded program is deleted from the reservation memory in S121.

Instead of the reservation setting operation according to the program information transmitted from the broadcasting station in steps S100 through S108 shown in Fig. 2, the user can check the program list (printed matters, etc.), and input necessary items one by one using keys to set the reservation.

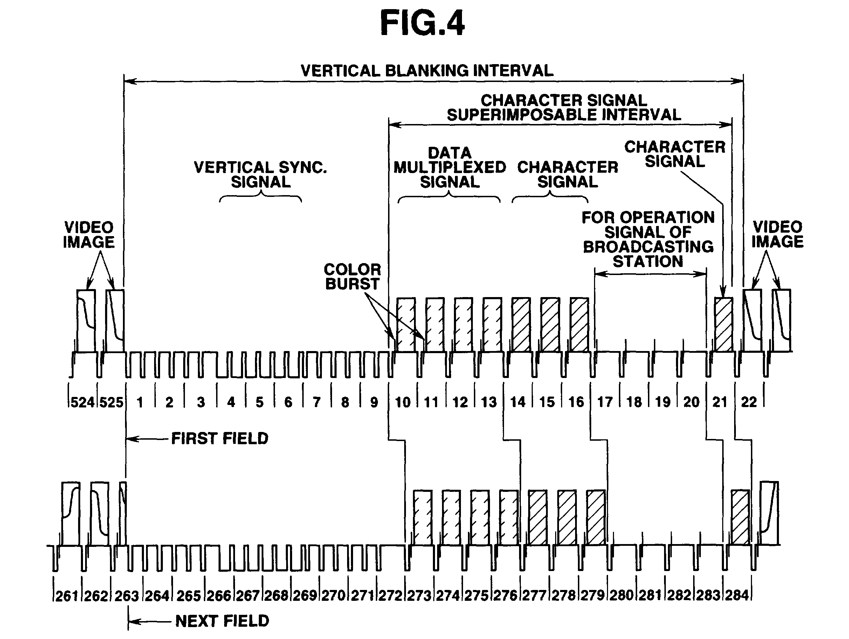

Fig. 4 shows a waveform diagram of the broadcast signal to which the present invention is applied (for example, a television broadcast signal). Fig. 4 shows a transmission waveform of the teletext broadcast multiplexed in the television signal in Japan.

The teletext broadcast refers to encoding image information including characters and graphics, multiplexing the encoded data with the television broadcast waveform in the form of a digital character signal, and transmitting and converting the signal into a video signal on the receiving side for display on the television receiver.

A character signal is transmitted after being superimposed in the vertical blanking interval of a video signal not displayed on the television screen. The horizontal scanning interval in which a character signal can be superimposed is, in principle, the 10th through 21st horizontal scanning interval (hereinafter referred to as H) and the 273rd through 284th H. The period assigned to the character signal is the 14th through 16th H, the 21st H, the 277th through 279th H, and the 284th H. In the horizontal scanning interval of the vertical blanking interval assigned to the character signal, a character broadcast program and the television program list information, which is program guide information, are superimposed and transmitted.

The television program list information includes a broadcast date, a broadcasting station name (channel name), a broadcast starting and ending time, a program identification code, program title (program name), etc.

In addition, based on the "Standard Television Data Multiplex Broadcasting in the transmission system using the vertical blanking interval" regulated by the Electric Wave Industry Association in Japan in 1996, the television program list information which is a program guide information, is superimposed and transmitted through the data multiplex broadcasting using the 10th through 13th and the 273rd through 276th H of the horizontal scanning interval.

Thus, the television signal in which the television program list information is superimposed is received, and a program to be reserved for recording is retrieved and reserved from the television program list displayed according to the television program list information.

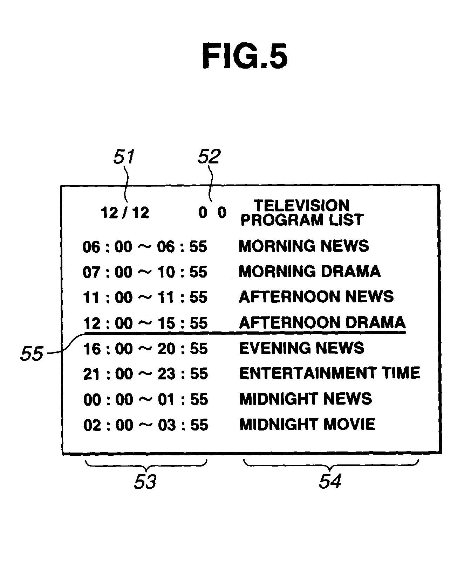

Fig. 5 shows a program reservation list illustrating an example of a program reserving operation.

As shown in Fig. 5, a program to be reserved for recording can be selected and set by displaying from the transmitted television program list information a broadcast starting and ending time 53 and a program title 54 based on a broadcast date 51 and a broadcasting station name 52. On the displayed program list, a cursor 55 is generated and displayed to select and reserve a program. Using a cursor key, a cursor 55 is moved to the desired broadcast time and the program name, and a determination of the reserved program is input using a reservation determining key. Then, the program information of the reserved program is stored in the reservation memory of the timer reservation means in the recording apparatus. The current time data of the clock means in the recording apparatus is compared with the broadcast starting time of the reserved program. When it reaches the broadcast starting time, a channel corresponding to the name of the broadcasting station is selected and simultaneously the apparatus starts recording the reserved program. When the broadcast ending time of the reserved program is reached, the recording stops.

As described above, according to the present invention, when the ending time is changed after starting the recording, the contents of the reservation are changed by using either the ending time of the program obtained in real time from the program guide information included in the broadcast signal, or the starting time of the next program. Then, the remaining time of the reserved program is compared with the remaining time of the recording medium, and the recording mode is changed such that the program can be efficiently stored in the recording medium. If an unexpected program re-organization (prolonging or shortening the program) is made, the time information of the reservation data is changed in real time using the program guide information (EPG) including the information about the actual ending and starting times of the program, and the amount of information to be recorded is efficiently changed (that is, the recording mode is appropriately changed) suitably for the actually remaining broadcast time corresponding to the recordable area (remainder) of the recording medium. As a result, the entire program can be recorded without fail, and the remaining recording area in the recording medium can be efficiently used without an erroneous recording such as the recording stopped during the broadcast of the program. Furthermore, when the broadcast time of the reserved program is extended, the recording mode is not switched from the standard mode to the long time mode, or the data rate is not switched from a higher rate to a lower rate until the remaining recording time of the recording medium becomes shorter than the remaining broadcast time of the reserved program being recorded. Therefore, when the entire program is recorded and played back, the highest possible level of read signals can be obtained.

According to the embodiment of Fig. 1, a television broadcast signal is used as a broadcast signal. However, it is obvious that other broadcast signals such as voice broadcast signals can be used. In addition, the broadcast signal can be transmitted using the electro-magnetic wave, or can be delivered thorough a cable such as the CATV.

The present invention is not limited to the above described embodiments, but can be applicable to various embodiments within the scope of the subject matters of the present invention.

## Claims

1. A recording apparatus which has recording means (20) for recording in a recording medium (21) having a predetermined recording area a variable amount of recorded information per unit area of the recording medium, and records a broadcast signal, comprising:
recordable area determination means (15) for determining a recordable area of said recording medium (21), and outputting recordable area information;
receiving means (11) for receiving a broadcast signal with which program information including a broadcast time of a program is multiplexed;
extraction means (12) for extracting broadcast time information about said program from the received broadcast signal; and
record control means (16) for adjusting an amount of information per unit area of the recording medium (21) in said recording means (20) such that the program can be completely recorded in said recordable area according to said broadcast time information and said recordable area information.

2. An apparatus according to claim 1, wherein
said broadcast signal is a television broadcast signal, and program information is superimposed in a vertical blanking interval.

3. A recording apparatus which has recording means (20) for recording in a recording medium (21) having a predetermined recording area a variable amount of recorded information per unit area of the recording medium, and records a broadcast signal, comprising:
recordable area determination means (15) for determining a recordable area of said recording medium (21), and outputting recordable area information;
receiving means (11) for receiving a broadcast signal with which program information including a broadcast time about a program is superimposed;
extraction means (12) for extracting broadcast time information of said program from the received broadcast signal; and
record control means (16) for adjusting an amount of information per unit area of said recording medium (21) in said recording means (20) such that a highest quality read signal can be obtained when the program is completely recorded and played back according to said broadcast time information and said recordable area information.

4. An apparatus according to claim 3, wherein
said broadcast signal is a television broadcast signal, and program information is superimposed in a vertical blanking interval.

5. A recording apparatus which has a recording medium (21) and records a television broadcast signal, comprising:
timer reservation means (13) for storing in advance recording reservation information including time information about a program to be recorded;
receiving means (11) for receiving a television broadcast signal in which program information including a broadcast time about the program is superimposed into a vertical blanking interval and broadcast;
extraction means (12) for extracting broadcast time information about said program from the received television broadcast signal; and
timer reservation time change means (14) for comparing said time information stored by said timer reservation means (13) with said broadcast time information about the program, and changing the time information stored by said timer reservation means (13) according to said broadcast time information when a comparison result indicates difference.

6. A recording apparatus according to claim 1, further comprising:
timer reservation means (13) for storing in advance recording reservation information including time information about a program to be recorded and recording mode information; and
timer reservation time change means (14) for comparing said time information stored by said timer reservation means (13) with said broadcast time information about the program, and changing the time information stored by said timer reservation means (13) according to said broadcast time information when a comparison result indicates difference.

7. An apparatus according to claim 1, 2, 3, 4, or 6, wherein
said recording medium (21) is a magnetic tape contained in a cassette, and
said recording means (20) has a standard recording mode and a recording mode for a tape speed lower than the standard recording mode.

8. An apparatus according to any one of claims 1 through 4, wherein
said recording medium (21) is a disk having a recording surface, and
said recording means (20) comprises means for recording on said recording medium (21) a recording information signal as a digital signal and changing a data rate of the recorded digital signal.

9. An apparatus according to claim 7, wherein
said recording means (20) changes a recording mode under control of said record control means (16) while recording a program.

10. An apparatus according to claim 5 or 6, wherein
said timer reservation time change means (14) changes the time information of said timer reservation means (13) while recording a program.
